(19) Europäisches Patentamt
European Patent Office
Office européen des brevets

(11) **EP 2 898 341 B1**

(12) **EUROPEAN PATENT SPECIFICATION**

(45) Date of publication and mention
of the grant of the patent:
**14.12.2016 Bulletin 2016/50**

(51) Int Cl.:
*G01S 5/02* (2006.01)   *H04W 4/02* (2009.01)

(21) Application number: **13748440.8**

(22) Date of filing: **05.08.2013**

(86) International application number:
**PCT/US2013/053545**

(87) International publication number:
**WO 2014/046788 (27.03.2014 Gazette 2014/13)**

(54) **NON-GEOTAGGED ACCESS POINT POSITIONING**

ZUGANGSPUNKTPOSITIONIERUNG OHNE GEO-TAGGING

LOCALISATION DE POINT D'ACCÈS NON GÉOMARQUÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.09.2012 US 201261705046 P
01.03.2013 US 201313782907**

(43) Date of publication of application:
**29.07.2015 Bulletin 2015/31**

(73) Proprietor: **Qualcomm Incorporated
San Diego, CA 92121-1714 (US)**

(72) Inventors:
• **GAO, Weihua**
  **San Diego, California 92121 (US)**
• **ZHANG, Gengsheng**
  **San Diego, California 92121 (US)**
• **DO, Ju-Yong**
  **San Diego, California 92121 (US)**
• **BHATIA, Ashok**
  **San Diego, California 92121 (US)**

(74) Representative: **Emde, Eric
Wagner & Geyer
Gewürzmühlstrasse 5
80538 München (DE)**

(56) References cited:
**EP-A1- 2 327 996       WO-A2-2009/155036
US-A1- 2005 134 456    US-A1- 2005 143 101
US-A1- 2011 059 752    US-A1- 2012 015 665**

**Description**

## BACKGROUND

Advancements in wireless communication technology have greatly increased the versatility of today's wireless communication devices. These advancements have enabled wireless communication devices to evolve from simple mobile telephones and pagers into sophisticated computing devices capable of a wide variety of functionality such as multimedia recording and playback, event scheduling, word processing, e-commerce, etc. As a result, users of today's wireless communication devices are able to perform a wide range of tasks from a single, portable device that conventionally required either multiple devices or larger, non-portable equipment.

Various applications are utilized to obtain and utilized to locate the position of a wireless communication device. For instance, location based services (LBSs) leverage the location of an associated device to provide controls for one or more applications running on the device. Applications of LBS functionality implemented with respect to wireless communication devices include personal navigation, social networking, targeting of content (e.g., advertisements, search results, etc.), among others.

Attention is drawn to document US2005134456 (A1) which describes a method and location determination module for determining a location of one of a plurality of units usin neighbor lists. Each unit is communicatively coupled to at least some of the other plurality of units, where at least some of the plurality of units are reference unts, whose locations are known. The units communicate with other nearby units within communication range, to establish neighbor lists. A unit to be located then identifies an aggregate value corresponding to the number of occurrences of the reference units in the neighbor list of the unit to be located and the neighbor lists of each of a group of associated units. The location of the unit to be located is then determined, based upon the known locations of the reference units and the number of identified occurrences of the reference wits in the corresponding neighbor lists.

Attention is also drawn to document US2012015665 (A1), which describes systems, methods, and devices are described for determining aphysical location of a wireless device. A receiver may be configured to receive associations between anchor locations and sensor nodes, wherein each sensor node uses near field communications to identify an anchor location. The receiver may also receive signal strength measurements from the wireless device measuring the signals strength of wireless sensor nodes. Arrangements may also be configured to determine physical locations of the sensor nodes based on physical locations of anchor locations and utilize received signal strength measurements with the determined physical locations of the sensor nodes to determine the physical location of the wireless device.

## SUMMARY

In accordance with the present invention a method and system for locating a transceiver as defined in the independent claims is provided. Embodiments of the invention are claimed in the dependent claims.

An example method for locating a target transceiver in a wireless communication system includes: obtaining at least one scan list indicating a set of transceivers including the target transceiver; identifying, from stored geotagging data, locations of at least some previously located transceivers represented in the at least one scan list that are distinct from the target transceiver; generating a list of neighbor transceivers corresponding to the target transceiver based on the at least one scan list; and calculating an estimated location of the target transceiver using the list of neighbor transceivers and the locations of the previously located transceivers represented in the at least one scan list.

Implementations of such a method may include one or more of the following features. The method further includes detecting and removing an erroneously-listed transceiver from the list of neighbor transceivers prior to the estimating. The detecting the erroneously-listed transceiver includes: identifying a cluster of transceivers within the list of neighbor transceivers according to locations of the neighbor transceivers; and determining a neighbor transceiver, in the list of neighbor transceivers, having a location that deviates from the cluster of transceivers by more than a threshold to be the erroneously-listed transceiver. The identifying includes obtaining the geotagging data from a transceiver database. The method further includes storing the estimated location of the target transceiver at the transceiver database. The method further includes: marking the estimated location of the target transceiver as non-geotagged in the transceiver database; and excluding the estimated location of the target transceiver from subsequent transceiver positioning operations. The obtaining includes obtaining the at least one scan list from at least one of a mobile device or a transceiver database. The obtaining includes at least one mobile device communicating with the set of transceivers, the method further comprising the at least one mobile device sending the at least one scan list to the transceiver database. The geotagging data include global navigation satellite system (GNSS) information corresponding to the previously located transceivers. The calculating includes calculating the location of the target transceiver using at least one of a simple mean of locations, a simple median of locations, a weighted mean of locations, a weighted mean of positions corresponding to k received signals of highest received signal strength, or a least-squares iterated location determined by trilateration using received signal strength indications. The target transceiver include at least one of a Wi-Fi access point, a short-range wireless communication technology transceiver, or a cellular base station.

An example apparatus for locating a transceiver in a wireless communication system includes: a scan list compiler configured to obtain at least one scan list indicating a set of transceivers, the set of transceivers including a target transceiver; a neighbor list generator communicatively coupled to the scan list compiler and configured to identify, from stored geotagging data, locations of at least some previously located transceivers represented in the at least one scan list that are distinct from the target transceiver and to generate a neighbor list of transceivers that neighbor the target transceiver based on the at least one scan list; and a position estimator communicatively coupled to the neighbor list generator and configured to estimate a location of the target transceiver using the neighbor list and the locations of the previously located transceivers represented in the at least one scan list.

Implementations of such an apparatus may include one or more of the following features. The target transceiver comprises at least one of a Wi-Fi access point, a short-range wireless communication technology transceiver, a wireless communication technology transceiver, or a cellular base station. The neighbor list generator is configured to detect and remove an erroneously-listed transceiver from the neighbor list prior to the position estimator estimating the location of the target transceiver. To detect the erroneously-listed transceiver the neighbor list generator is configured to: identify a cluster of transceivers within the neighbor list according to locations of the neighbor transceivers; and determine a neighbor transceiver, in the neighbor list, having a location that deviates from the cluster of transceivers by more than a threshold to be the erroneously-listed transceiver. The neighbor list generator is configured to identify the locations by obtaining the geotagging data from a transceiver database. The position estimator is further configured to store the estimated location of the target transceiver at the transceiver database. The position estimator is further configured to: mark the estimated location of the target transceiver as non-geotagged in the transceiver database; and exclude the estimated location of the target transceiver from subsequent transceiver positioning operations. The scan list compiler is configured to obtain the at least one scan list from at least one of a mobile device or a transceiver database. The apparatus is a mobile device and the scan list compiler is configured to obtain the at least one scan list by communicating with the set of transceivers and is configured to send the at least one scan list to the transceiver database. The geotagging data comprise global navigation satellite system (GNSS) information corresponding to the previously located transceivers. The position estimator is configured to estimate the location of the target transceiver using at least one of a simple mean of locations, a simple median of locations, a weighted mean of locations, a weighted mean of positions corresponding to k received signals of highest received signal strength, or a least-squares iterated location determined by trilateration using received signal strength indications. The target transceiver comprises at least one of a Wi-Fi access point, a short-range wireless communication technology transceiver, or a cellular base station.

An example system for locating a transceiver in a wireless communication system includes: means for obtaining at least one scan list indicating a set of transceivers, the set of transceivers including a target transceiver; means for identifying, from stored geotagging data, locations of at least some previously located transceivers represented in the at least one scan list that are distinct from the target transceiver; means for generating a list of transceivers that neighbor the target transceiver based on the at least one scan list; and means for estimating a location of the target transceiver using the list of transceivers that neighbor the target transceiver and the locations of the previously located transceivers represented in the at least one scan list.

Implementations of such a system may include one or more of the following features. The target transceiver comprises at least one of a Wi-Fi access point, a short-range wireless communication technology transceiver wireless communication technology transceiver or a cellular base station. The system further includes means for detecting and removing an erroneously-listed transceiver from the list of neighbor transceivers prior to the estimating. The means for detecting the erroneously-listed transceiver are configured to: identify a cluster of transceivers within the list of neighbor transceivers according to locations of the neighbor transceivers; and determine a neighbor transceiver, in the list of neighbor transceivers, having a location that deviates from the cluster of transceivers by more than a threshold to be the erroneously-listed transceiver. The means for identifying are configured to obtain the geotagging data from a transceiver database. The system further includes means for storing the estimated location of the target transceiver at the transceiver database. The system further includes: means for marking the estimated location of the target transceiver as non-geotagged in the transceiver database; and means for excluding the estimated location of the target transceiver from subsequent transceiver positioning operations. The means for obtaining are configured to obtain the at least one scan list from at least one of a mobile device or a transceiver database. The means for obtaining comprise at least one mobile device configured to communicate with the set of transceivers and to send the at least one scan list to the transceiver database. The geotagging data comprise global navigation satellite system (GNSS) information corresponding to the previously located transceivers. The means for estimating are configured to estimate the location of the target transceiver using at least one of a simple mean of locations, a simple median of locations, a weighted mean of locations, a weighted mean of positions corresponding to k received signals of highest received signal strength, or a least-squares iterated location determined by trilateration using received signal strength indications. The target transceiver comprises at least one of a Wi-Fi access point, a short-range wireless communication technology transceiver, or a cellular base station.

**EP 2 898 341 B1**

An example processor-readable storage medium includes processor-readable instructions for locating a target transceiver in a wireless communication system, the instructions being configured to cause a processor to: obtain at least one scan list indicating a set of transceivers including the target transceiver; identify, from stored geotagging data, locations of at least some previously located transceivers represented in the at least one scan list that are distinct from the target transceiver; generate a list of neighbor transceivers corresponding to the target transceiver based on the at least one scan list; and calculate an estimated location of the target transceiver using the list of neighbor transceivers and the locations of the previously located transceivers represented in the at least one scan list.

Implementations of such a storage medium may include one or more of the following features. The storage medium further includes instructions configured to cause the processor to detect and remove an erroneously-listed transceiver from the list of neighbor transceivers prior to the estimating. The instructions configured to cause the processor to detect the erroneously-listed transceiver comprise instructions configured to cause the processor to: identify a cluster of transceivers within the list of neighbor transceivers according to locations of the neighbor transceivers; and determine a neighbor transceiver, in the list of neighbor transceivers, having a location that deviates from the cluster of transceivers by more than a threshold to be the erroneously-listed transceiver. The instructions configured to cause the processor to identify comprise instructions configured to cause the processor to obtain the geotagging data from a transceiver database. The storage medium further includes instructions configured to cause the processor to store the estimated location of the target transceiver at the transceiver database. The storage medium further includes instructions configured to cause the processor to: mark the estimated location of the target transceiver as non-geotagged in the transceiver database; and exclude the estimated location of the target transceiver from subsequent transceiver positioning operations. The instructions configured to cause the processor to obtain comprise instructions configured to cause the processor to obtain the at least one scan list from at least one of a mobile device or a transceiver database. The geotagging data comprise global navigation satellite system (GNSS) information corresponding to the previously located transceivers. The instructions configured to cause the processor to estimate comprise instructions configured to cause the processor to estimate the location of the target transceiver using at least one of a simple mean of locations, a simple median of locations, a weighted mean of locations, a weighted mean of positions corresponding to k received signals of highest received signal strength, or a least-squares iterated location determined by trilateration using received signal strength indications.

Items and/or techniques described herein may provide one or more of the following capabilities, as well as other capabilities not mentioned. Techniques described herein increase robustness for positioning of access points and other transceivers based on user-submitted data, improving positioning performance for indoor environments and/or other areas in which satellite positioning and/or other positioning technologies are not available. Further, as transceiver positions are determined via a crowdsourcing process, a database or other records corresponding to the transceiver positions can be built without a centralized source of this information. Other capabilities may be provided and not every implementation according to the disclosure must provide any particular capability, let alone all of the capabilities, discussed. Further, it may be possible for an effect noted above to be achieved by means other than that noted, and a noted item/technique may not necessarily yield the noted effect

**BRIEF DESCRIPTION OF THE DRAWINGS**

FIG. 1 is a block diagram of components of one embodiment of a mobile station.

FIG. 2 is a block diagram of a system for compiling AP scan list information.

FIG. 3 is a block diagram of a system for estimating location of a target AP using AP scan list information.

FIG. 4 is a flow diagram of a process of locating a target AP as performed by the system shown in FIG. 3.

FIG. 5 is two-dimensional plot of example AP and user positions within a wireless communication system.

FIGS. 6-7 are diagrams of example data structures utilized for storing AP location information.

FIG. 8 is a block flow diagram of a process of locating a transceiver in a wireless communication system.

FIG. 9 is a block diagram of an example of a computer system.

## DETAILED DESCRIPTION

Systems and methods are provided for utilizing non-geotagged transceiver listings, such as Wi-Fi access point (AP) scan lists, to estimate transceiver positions. Systems and methods are provided for positioning of non-geotagged APs in a wireless communication system, e.g., a Wi-Fi system, a cellular system including femtocells or other movable access points, a network of devices communicating via BLUETOOTH® short-range wireless communication technology and/or other wireless technologies, etc.

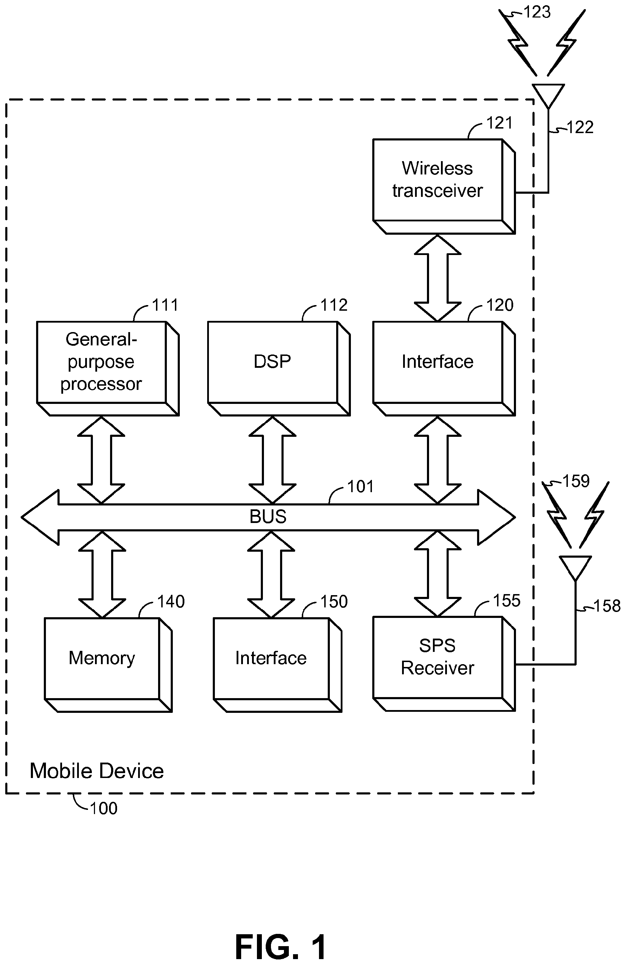

Referring to **FIG. 1,** a mobile device 100 is illustrated for which various techniques herein can be utilized. The mobile device 100 can include or implement the functionality of various mobile communication and/or computing devices; examples include, but are not limited to, personal digital assistants (PDAs), smartphones, computing devices such as laptops, desktops or tablet computers, automobile computing systems, etc., whether presently existing or developed in the future.

The mobile device 100 includes a wireless transceiver 121 that sends and receives wireless signals 123 via a wireless antenna 122 over a wireless network. The wireless transceiver 121 is connected to a bus 101. Here, the mobile device 100 is illustrated as having a single wireless transceiver 121. However, a mobile device 100 can alternatively have multiple wireless transceivers 121 and wireless antennas 122 to support multiple communication standards such as Wi-Fi, CDMA, Wideband CDMA (WCDMA), Long Term Evolution (LTE), BLUETOOTH short-range wireless communication technology, etc.

The wireless transceiver 121 may support operation on multiple carriers (waveform signals of different frequencies). Multi-carrier transmitters can transmit modulated signals simultaneously on the multiple carriers. Each modulated signal may be a Code Division Multiple Access (CDMA) signal, a Time Division Multiple Access (TDMA) signal, an Orthogonal Frequency Division Multiple Access (OFDMA) signal, a Single-Carrier Frequency Division Multiple Access (SC-FDMA) signal, etc. Each modulated signal may be sent on a different carrier and may carry pilot, overhead information, data, etc.

The mobile device 100 also includes an SPS receiver 155 that receives satellite positioning system (SPS) signals 159 (e.g., from SPS satellites) via an SPS antenna 158. The SPS receiver 155 can communicate with a single global navigation satellite system (GNSS) or multiple such systems. A GNSS can include, but are not limited to, Global Positioning System (GPS), Galileo, Glonass, Beidou (Compass), etc. SPS satellites are also referred to as satellites, space vehicles (SVs), etc. The SPS receiver 155 processes, in whole or in part, the SPS signals 159 and uses these SPS signals 159 to determine the location of the mobile device 100. A general-purpose processor 111, memory 140, DSP 112 and/or specialized processor(s) (not shown) may also be utilized to process the SPS signals 159, in whole or in part, and/or to calculate the location of the mobile device 100, in conjunction with SPS receiver 155. Storage of information from the SPS signals 159 or other location signals is performed using a memory 140 or registers (not shown). While only one general purpose processor 111, one DSP 112 and one memory 140 are shown in FIG. 1, more than one of any, a pair, or all of these components could be used by the mobile device 100. The general purpose processor 111 and DSP 112 associated with the mobile device 100 are connected to the bus 101.

The memory 140 can include a non-transitory computer-readable storage medium (or media) that stores functions as one or more instructions or code. Media that can make up the memory 140 include, but are not limited to, RAM, ROM, FLASH, disc drives, etc. Functions stored by the memory 140 are executed by general-purpose processor(s) 111, specialized processors, or DSP(s) 112. Thus, the memory 140 is a processor-readable memory and/or a computer-readable memory that stores software (programming code, instructions, etc.) configured to cause the processor(s) 111 and/or DSP(s) 112 to perform the functions described. Alternatively, one or more functions of the mobile device 100 may be performed in whole or in part in hardware.

A mobile device 100 can estimate its current position within an associated system using various techniques, based on other communication entities within view and/or information available to the mobile device 100. For instance, a mobile device 100 can estimate its position using information obtained from access points (APs) associated with one or more wireless local area networks (LANs), personal area networks (PANs) utilizing a short-range wireless communication technology such as BLUETOOTH or ZIGBEE®, etc., SPS satellites, and/or map constraint data obtained from a map server or LCI server, as well as additional information as described in further detail below.

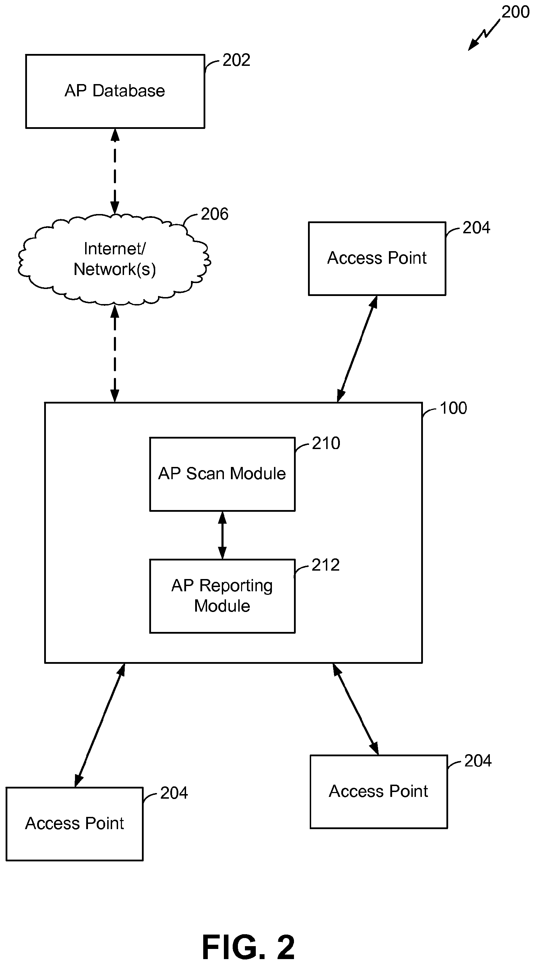

Referring next to **FIG. 2,** a system 200 for compiling AP scan list information includes the mobile device 100 illustrated by **FIG. 1** in addition to an AP database 202 and APs 204. The APs 204 are wireless transceivers and are positioned within an area associated with the mobile device. The APs 204 may provide communication service for a surrounding area. The APs 204 may also selectively provide communication service for one or more devices in the surrounding area, which may or may not include the mobile device 100, based on access restrictions, loading restrictions or other factors. Additionally, while not illustrated in **FIG. 2** the system may also include location beacons and/or other devices which broadcast location-related information but do not provide communication service. Further, while **FIG. 2** and the description herein refer specifically to a Wi-Fi communication network or other communication system having APs 204, other transceivers, such as BLUETOOTH short-range wireless communication technology transceivers, femtocells, or the like, could be used in addition to, or in place of, the APs 204 without departing from the scope of the description.

An AP scan module 210, which maybe a wireless transceiver 121 of the mobile device 100 or a specialized unit, performs a scan of APs 204 within range of the mobile device 100. In response to this scan, the AP scan module 210 receives information from the APs 204 and/or other devices. Subsequently, an AP reporting module 212 is utilized to provide the received information from the APs to one or more data sources. As illustrated in **FIG. 2,** the AP reporting module 212 may transmit AP information over the Internet or one or more networks 206 to a network-based AP database 202. While the AP database 202 is illustrated as a network entity remote from the mobile device 100, the AP database 202 and/or some or all of its functionality could alternatively be implemented at the mobile device 100, e.g., via a memory 140.

The AP database 202 compiles AP information from one or more mobile devices in the form of network scan lists (e.g., Wi-Fi scan lists, BLUETOOTH short-range wireless communication technology scan lists, cellular scan lists, etc.) or other suitable formats. For instance, the AP database 202 may maintain a crowdsourced set of AP scan lists, as described in further detail below. Other implementations of the AP database 202 are also possible.

When a mobile device 100 is engaged in crowdsourcing, the mobile device 100 may additionally have access to an external positioning system, such as a GNSS (via a SPS receiver 155 as described above) or the like. However, in some cases an external positioning service may not be available. For example, when the mobile device is in a deep indoor environment or urban canyon, a GNSS service may not be available. In this case, a generated scan list will not have any direct position information. As another example, the mobile device may not have GNSS capability or may be configured to allow simultaneous GNSS and wireless communication. In this case, the scan list may be organized in the format shown in Table 1 below, where P indicates a present feature, N/A indicates a non-present feature, and O indicates an optional feature. Table 1 provides an example scan list format for a Wi-Fi scan list; other network scan lists associated with other network technologies, such as BLUETOOTH short-range wireless communication technology scan lists or cellular scan lists, may utilize similar structures.

Table 1: Format of Wi-Fi scan list without GNSS information.

| Observation specific data | | |
|---|---|---|
| Observation time | P | Standard 64 bit UTC ms timestamp, or GPS time stamp |
| Latitude | N/A | |
| Longitude | N/A | |
| Altitude | N/A | |
| Horizontal Uncertainty | N/A | |
| Vertical Uncertainty | N/A | |
| Per AP data (includes all AP scanned, repeated for each AP) | | |
| MAC Address | P | MAC address of AP |
| SSID | O | SSID of AP |
| Encryption Type | O | Encryption type , open, WEP, WPA, WPA-PSK, or EAP |
| RSSI | P | Observed RSSI in dBm |
| RTT | O | Observed RTT in units of nanoseconds |
| Radio Spec | O | IEEE 802.11a. IEEE 802.11b, IEEE, 802.11g, IEEE, 802.11n, ... |
| Frequency Band | O | Frequency band, 2.4gHz or 5gHz |
| Channel Number | O | Channel used by the network |
| Maximum Rate | O | Maximum data rate supported by the AP in Mbps |
| Network Type | O | Network type: AdHoc or Infrastructure |

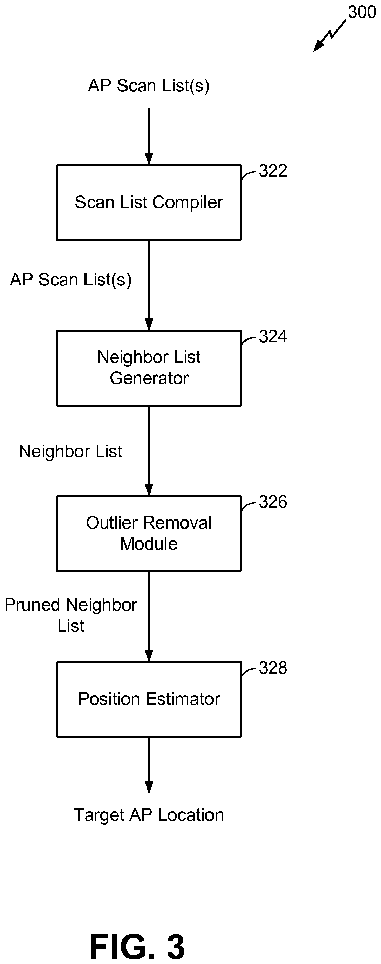

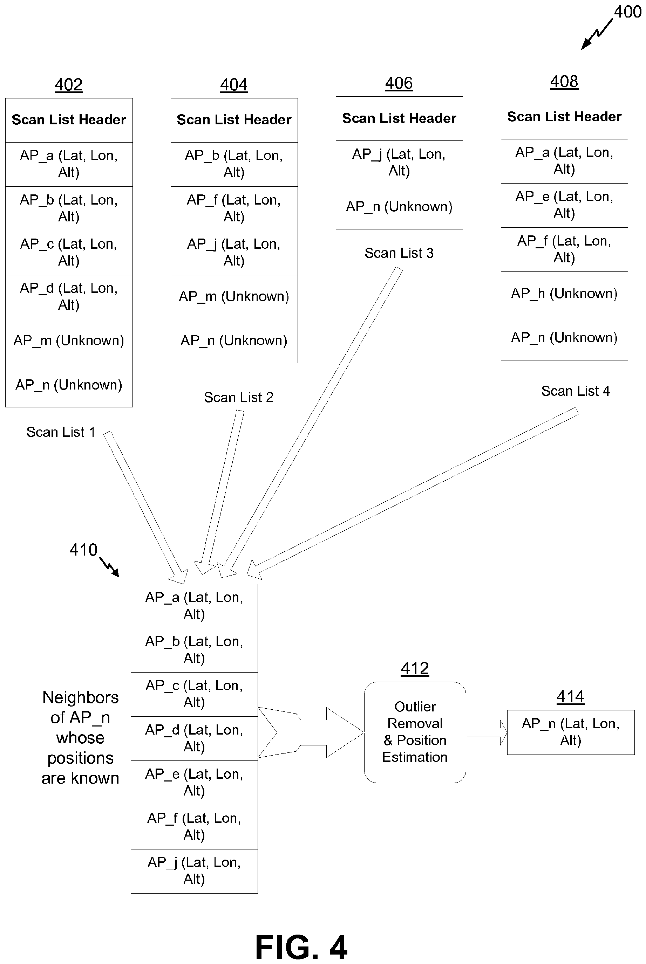

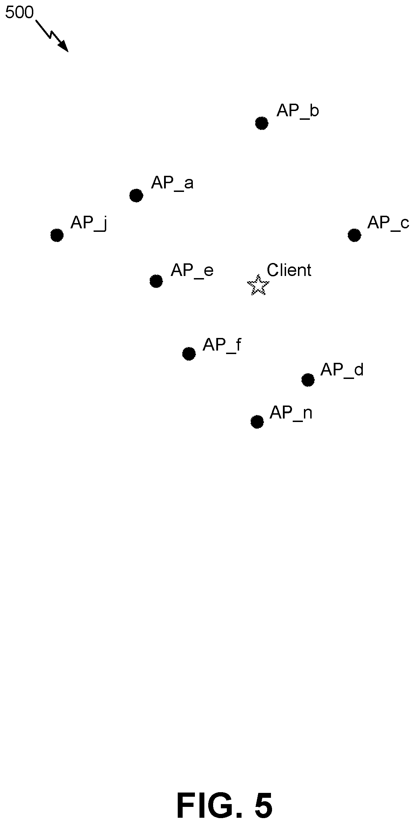

While there is no explicit position information in the scan list as constructed according to Table 1, implicit position information may be embedded in the list. For instance, positions of one or more APs 204 associated with the scan list may be stored at and retrieved from the AP database 202. From these locations, the positions for APs 204 which are not in the AP database 202 may also be calculated. A block diagram of a system for these calculations is shown by system 300 in **FIG. 3,** which includes a scan list compiler 322, a neighbor list generator 324, an outlier removal module 326 and a position estimator 328 that are communicatively coupled to each other (e.g., directly or indirectly). System 300 may be implemented wholly or in part at the mobile device 100, at a server (e.g., a server associated with the AP database 202) or other computing entity remote to the mobile device 100, or a combination of the mobile device 100 and a remote computing entity. With respect to positioning of a target AP, one or more AP scan lists are obtained via the scan list compiler 322 (e.g., the scan list compiler sends the one or more AP scan lists to a transceiver database, e.g., the AP database 202). The scan list compiler 322 can obtain the one or more AP scan lists, e.g., from one or more mobile devices 100 via a crowdsourcing process, and/or by other means. The one or more AP scan lists are processed via the neighbor list generator 324 as described below, resulting in a list of neighbor APs, i.e,. APs that are within communication range of the target AP, and preferably capable of communication with the target AP (e.g., are not prevented from communicating with the target AP). The terms "list of neighbor APs" and "list of neighbor transceivers" are used interchangeably herein with the terms "neighbor list of APs" and "neighbor list of transceivers," respectively. The outlier removal module 326 may further process this list to prune any erroneously listed APs according to one or more techniques as described below. From the processed list, a position estimator 328 determines the location of the target AP. An example of the processing operations performed by system 300 for a set of scan lists and a target AP AP_n is shown by diagram 400 in **FIG. 4.** In particular, diagram 400 shows a set of scan lists 402, 404, 406, 408, which are compiled to form a neighbor list 410 of APs corresponding to the target AP AP_n. The neighbor list 410 is processed by an outlier removal and position estimation block 412, from which an estimated position 414 for AP_n is obtained. The operations shown in diagram 400 are performed for an example network configuration of multiple access points and a client mobile device, as shown by diagram 500 in **FIG. 5.** While diagram 500 is a two-dimensional plot, data points corresponding to the diagram could also be configured to convey information relating to altitude, and/or any other suitable information.

Regarding operation of the position estimator 328, a simple mean algorithm with outlier detection maybe used, e.g., when RSSI (received signal strength indication) values having high uncertainty are received from crowdsourcing data. As another example, more complex weighted mean algorithms based on RSSI may be utilized. Other algorithms, such as a mixed sector algorithm, may also be used. Various examples of algorithms that may be used are described in more detail below.

In some cases, a scan list may be obtained in which no APs 204 are registered in the AP database 202. Such a list is referred to as a pure blind scan list. In this case, positioning mechanisms such as a self-located AP (SLAP) technique can be utilized to determine the relative positions of the APs 204. If absolute locations of a portion of the APs 204 are later obtained, the positions can be propagated to the remainder of the APs 204 using the known AP positions as anchors. To these ends, pure blind scan lists may be saved in separate storage, e.g., at the memory 140, for subsequent processing.

For a non-geotagged scan list in which at least some of the listed APs 204 are registered with the AP database 202, location information may be extracted from the existing scan list. First, APs 204 listed in the scan list are checked against the AP database 202 to determine whether corresponding location information is present. If so, AP locations not given in the AP database 202 may be determined by reverse positioning using the known AP positions. For instance, the neighbor list generator 324 may identify a target AP 204 having an unknown position and compile a list of APs 204 in one or more obtained scan lists that are within the maximum scan range of the target AP. Using this information combined with the known position of other APs near the target AP, the position of the target AP is determined using outlier removal and reverse positioning algorithms, e.g., as performed by the outlier removal module 326 and position estimator 328, respectively. Techniques utilized by these modules 326, 328 are described in further detail below.

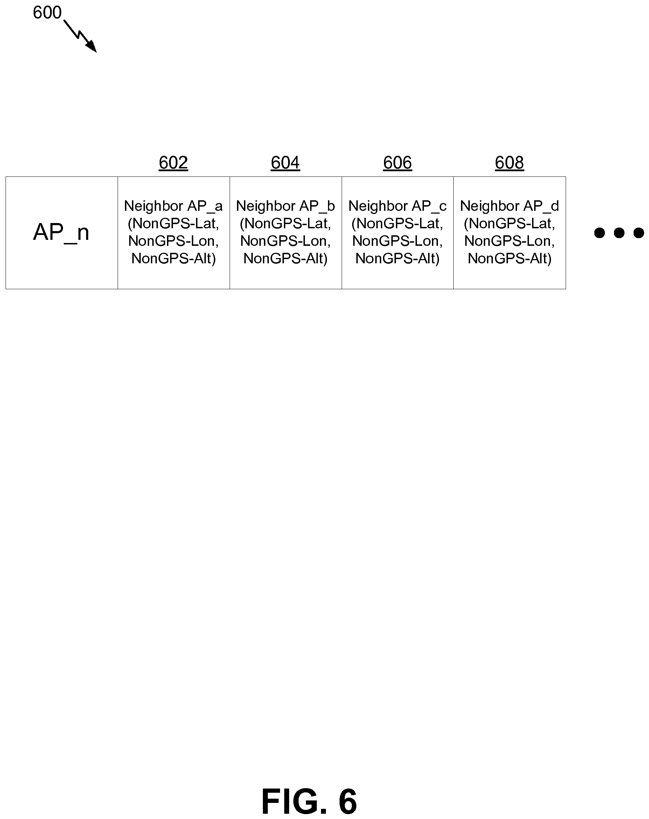

To facilitate positioning, crowdsourcing data for various APs 204 can be formatted using the data structure 600 shown in **FIG. 6,** which includes respective entries 602, 604, 606, 608, ..., for APs that neighbor an AP corresponding to the data structure 600, here labeled as AP_n. If AP_n is on a scan list that has a geotag, i.e., an indication of a geographical location (corresponding to the location of the AP), then AP_n can be processed as a geotagged crowdsourcing AP. If AP_n is on some non-geotagged scan lists and some of its neighboring APs have position information from the AP database 202, then AP_n may be positioned as if it has been seen at those neighbors' positions. Stated another way, each neighbor's position is treated as a measurement position for that AP. Those positions are then utilized to position AP_n.

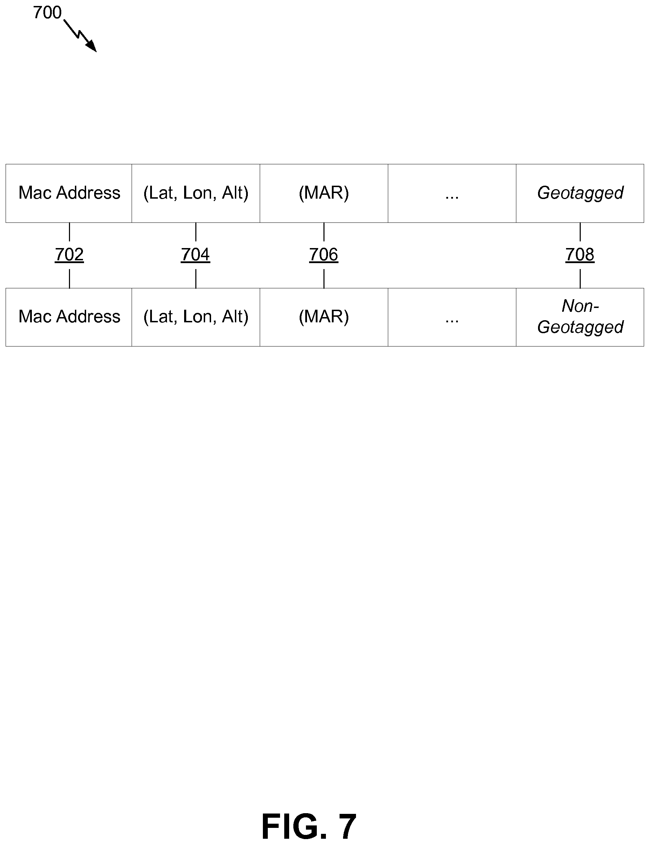

As further shown by data structure 700 in **FIG. 7,** a flag field 708 may be used in the data structure 700 along with other fields such as a media access control (MAC) address field 702, a latitude/longitude/altitude field 704, a maximum antenna range (MAR) field 706, and/or other fields for each AP. The flag field 708 indicates whether the AP's position is based on geotagged crowdsourcing data or non-geotagged scan lists. This flag may serve as a marking of the estimated location of a target transceiver as non-geotagged in a transceiver database. This flag may be used, e.g., to exclude non-geotagged APs from derivation of the positions of other APs to reduce propagated positioning error. As an alternative to data structure 700, each AP may have a field corresponding to a positioning uncertainty, which may subsequently be used to manage error propagation. Other techniques may be used.

To reduce the storage utilized for the AP database 202, various optimizations may be employed. For instance, each scan list may be assigned a scan list ID (SLID), such that for each AP, the IDs of the scan lists including the AP may be stored instead of records for each of the neighbor APs. For subsequent positioning, the neighbor AP information can be retrieved using the stored SLIDs as a reference.

Assuming the position of at least one AP in respective scan lists is known, the scan lists may be stored based on their geographical area, e.g., as a grid map. Based on this storage scheme, positioning of APs may proceed by navigating through adjacent scan lists, bringing the APs in those scan lists to memory, performing reverse positioning for APs with unknown locations, and then incrementally moving to the next geographic area. In this way, the number of times a scan list and its corresponding AP locations are accessed maybe reduced.

Position Estimation Techniques

The position estimator 328 may utilize various techniques (e.g., algorithms) for estimating AP position based on the obtained positions of other APs in the surrounding area. These techniques include simple mean/median of locations/positions, a weighted mean of locations/positions, and max RSSI techniques, although other techniques are possible. The location of a target transceiver can be calculated using at least one of a simple mean of locations, a simple median of locations, a weighted mean of locations, a weighted mean of positions corresponding to *k* received signals of highest received signal strength, or a least-squares iterated location determined by trilateration using received signal strength indications. In the following algorithms, the difference in altitude between APs is assumed to be negligible, thus enabling altitude to be omitted from the calculations. However, the algorithms described below could be extended to additionally account for altitude by, e.g., expanding the scope of the calculations to a three-dimensional *(x, y, z)* coordinate system, and/or via other appropriate adjustments.

Simple Mean/Median

With regard to the simple mean/median algorithm, the estimated AP position is a simple mean/median of all positions of the neighbor APs. The simple mean calculation may be expressed as follows:

$$AP_{POS} = \frac{\sum_{i=1}^{NumNbr}(Nbr_{POS_i})}{NumNbr} \quad AP_{POS} = \frac{\sum_{i=1}^{NumNbr}(Nbr_{POS_i})}{NumNbr}$$

where *NumNbr* is the number of neighbor APs, $AP_{POS}$ is the position of the target AP, and $Nbr_{POSi}$ is the position of the *i*-th neighbor AP.

Additionally, the simple median calculation may be expressed as follows:

$$AP_{pos}x = median\ (Nbr_{POS}x_1, \ldots, Nbr_{POS}x_i, \ldots Nbr_{POS}x_{NumNbr})$$

$$AP_{pos}y = median\ (Nbr_{POS}y_1, \ldots, Nbr_{POS}y_i, \ldots Nbr_{POS}y_{NumNbr})$$

where $AP_{pos}x$ and $AP_{pos}y$ are the position of the target AP in the *x* and *y* directions, respectively, with respect to an (*x, y*) coordinate system and $Nbr_{POS}xi$ and $Nbr_{posyis}yi$ are the position of the *i*-th neighbor AP in the *x* and *y* directions, respectively.

Weighted Mean

With regard to the weighted mean algorithm, the estimated AP position is calculated as a weighted mean of reported mobile station GNSS measurements. The weighted mean calculation may be expressed as follows:

$$AP_{POS} = \frac{\sum_{i=1}^{NumNbr} weight_i\ (Nbr_{POS_i})}{\sum_{i=1}^{NumNbr} weight_i}$$

The weighting scheme utilized in the above calculation maybe computed in various manners. For instance, values assigned to the parameter *weight_i* may include, but are not limited to, the following:

1) 1 / (i-th neighbor's position uncertainty (e.g., in meters))
2) exp (0.1 × RSSI$_i$), where RSSI$_i$ is the observed RSSI (received signal strength indication) for the *i*-th neighbor AP given, e.g., in dBm
3) exp (0.1 × RSSI$_i$) / (*i*-th neighbor's position uncertainty (e.g., in meters))

Max RSSI

With regard to the max RSSI algorithm, *k* (e.g., 6) neighbors with the highest RSSI readings are selected and averaged using weights {*w*1, *w*2, ..., *wk*}, where w = $10^{0.1rssi}$ and rssi represents RSSI given in units of mW. The max k calculation may be expressed as follows:

$$AP_{POS} = \frac{\sum_{i=1}^{k} w_i (Nbr_{POS_i})}{\sum_{i=1}^{k} w_i}$$

where $Nbr_{POSi}$ is the position of the *i*-th neighbor (e.g., as given by the AP database 202), whose RSSI reading is the *i*-th largest among the mobile station reports.

Outlier Removal

The outlier removal module 326 may be utilized to pre-process AP lists before positioning via the position estimator 328 based on various factors. For instance, the outlier removal module 326 can be utilized to correct errors in an AP scan list (such as inaccurately reported APs or the like), movement of an AP from a previously reported location to a new location, or other inaccuracies. The outlier removal module 326 may utilize a clustering algorithm to identify clusters of reported APs. From these identified clusters, individual APs whose locations deviate from the cluster by more than a threshold amount can be identified as outliers and removed.
An example algorithm that may be utilized by the outlier removal module 326 is given in pseudocode format below. The following algorithm is merely one example that could be utilized, and other algorithms are possible.

```
IF No single AP for which position is known in the WiFi scan list:
Return Failure;
END

ratioThreshold     = 0.8;
circleRadius       = 1000;
extremeLowWeight = 1/10⁹;
APNumLowerLimit = 3;

MSPos_Lat   = LatAvg;
MSPos_Long = LongAvg;
MSPos_Alt    = AltAvg;
```

Loop through the APs and find the APs that are within *circleRadius* from Initial Mean (MSPos), mark them as FullWeightAPs;
AP_Density_Near_Mean = [(Number of FullWeightAPs)/(NumAPsforPosition)];

IF (NumNonImportantAPs = 0)
{
AP_Density_Near_Mean = 1;
}
ELSE
{
AP_Density_Near_Mean = 0;
}
ENDIF

WHILE ((NumAPs >3) & (AP_Density_Near_Mean <=0.8))
{
Mark the AP that is the farthest from the mean position as "NonImportantAPs"
    NumAPsforPosition--;

(LatAvg, LongAvg) = Weighted Average (FullWeightAPs Latitude, FullWeightAPs Longitude) + (NonImportantAPs Latitude, NonImportantAPs Longitude) * *extremeLowWeight* ;

Loop through the remaining APs and find the APs that are within *circleRadius* from Mean, mark them as FullWeightAPs; Find the APs that are outside *circleRadius* from Mean, mark them as NonImportantAPs;

AP_Density_Near_Mean = [(Number of FullWeightAPs)/(NumAPsforPosition)];
}
END WHILE

IF NumAPsforPosition <= *APNumLowerLimit*
{
(LatAvg, LongAvg) = Weighted Average (Latitude, Longitiude);
AltAvg = Weighted Average (Altitude);
}
ELSE
{
(LatAvg, LongAvg) = Weighted Average (FullWeightAPs Latitude, FullWeightAPs Longitude) + (NonImportantAPs Latitude, NonImportantAPs Longitude) * *extremeLowWeight* ;

AltAvg = Weighted Average (FullWeightAPs Altitude) + (NonImportantAPs Altitude) * *extremeLowWeight* ;
{
ENDIF

MSPos_Lat    = LatAvg;
MSPos_Long  = LongAvg;
MSPos_Alt    = AltAvg;

In the above algorithm, the *extremeLowWeight* parameter is utilized to reduce the weight associated with APs that are not utilized in obtaining the position estimate. Alternatively, these unused APs could be simply removed from the calculations, e.g., by weighing such APs with a weight of 0 and/or by other means.

Target Transceiver Locating

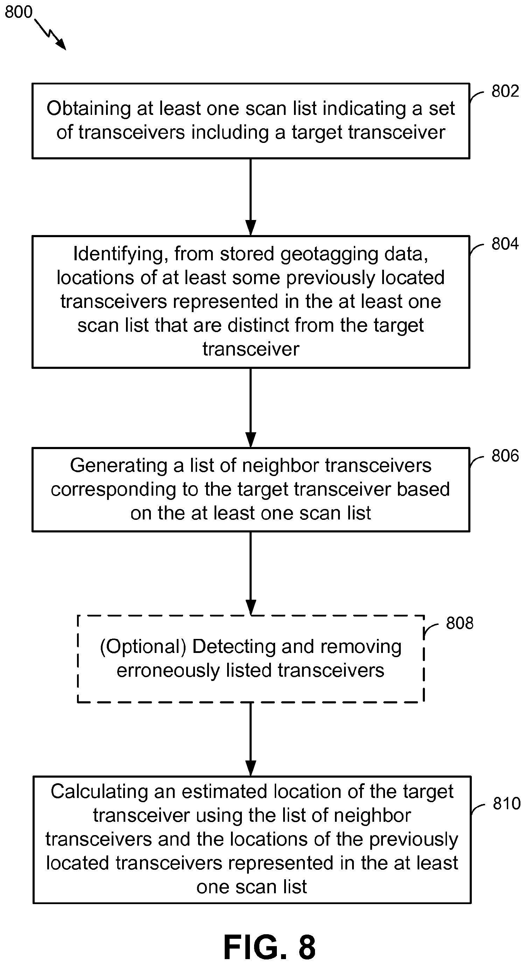

Referring to **FIG. 8,** with further reference to **FIGS. 1-7,** a process 800 of locating a target transceiver in a wireless communication system includes the stages shown. The process 800 is, however, an example only and not limiting. The process 800 can be altered, e.g., by having stages added, removed, rearranged, combined, and/or performed concurrently. For example, stage 808 discussed below may be included in the process 800 or not. Still other alterations to the process 800 as shown and described are possible.

At stage 802, the process 800 includes obtaining at least one scan list indicating a set of transceivers including the target transceiver. A scan list is an indication of the set of transceivers, and does not require any particular format. The at least one scan list is obtained by the scan list compiler 322, e.g., from the mobile device 100, and indicates a set of transceivers (e.g., Wi-Fi access points, BLUETOOTH short-range wireless communication technology transceivers, cellular base stations such as femtocells or the like, etc.). This set of transceivers, in turn, includes the target transceiver.

At stage 804, the process 800 includes identifying, from stored geotagging data, locations of at least some previously located transceivers represented (e.g., indicated) in the at least one scan list that are distinct from the target transceiver. The predetermined locations of at least some of the transceivers represented in the at least one scan list obtained at stage 802 are obtained from stored geotagging data, e.g., data associated with geotagged transceiver records in a transceiver database, e.g., the AP database 202. The geotagging data maybe, e.g., GNSS information.

At stage 806, the process 800 includes generating a list of neighbor transceivers corresponding to the target transceiver based on the at least one scan list. A list of transceivers that neighbor the target transceiver is generated based on the at least one scan list obtained at stage 802 by the neighbor list generator 324. Here, the term "neighbor" includes adjacent transceivers as well as non-adjacent transceivers that are within a same geographic area, e.g., an area defined by a scan range of a mobile device 100 or one of the transceivers, or any other area suitable for establishing proximity between transceivers.

At optional stage 808, the process 800 optionally includes detecting and removing erroneously listed transceivers. Erroneously listed transceivers (or outliers) are detected and removed from the list of neighbor transceivers generated at stage 806 by the outlier removal module 326. The outlier removal module 326 can detect and remove the erroneously listed transceivers, e.g., by identifying a cluster of transceivers within the list of neighbor transceivers according to locations of the neighbor transceivers and determining a neighbor transceiver, in the list of neighbor transceivers, having a location that deviates from a cluster of transceivers by more than a threshold to be the erroneously-listed transceiver, and removing that transceiver. The erroneously-listed transceiver can be removed prior to stage 810.

At stage 810, the process 800 includes calculating an estimated location of the target transceiver using the list of neighbor transceivers and the locations of the previously located transceivers represented in the at least one scan list. The neighbor list generated at stage 806 and optionally processed at stage 808 is used by the position estimator 328 with the transceiver locations identified at stage 804 to estimate a location of the target transceiver.

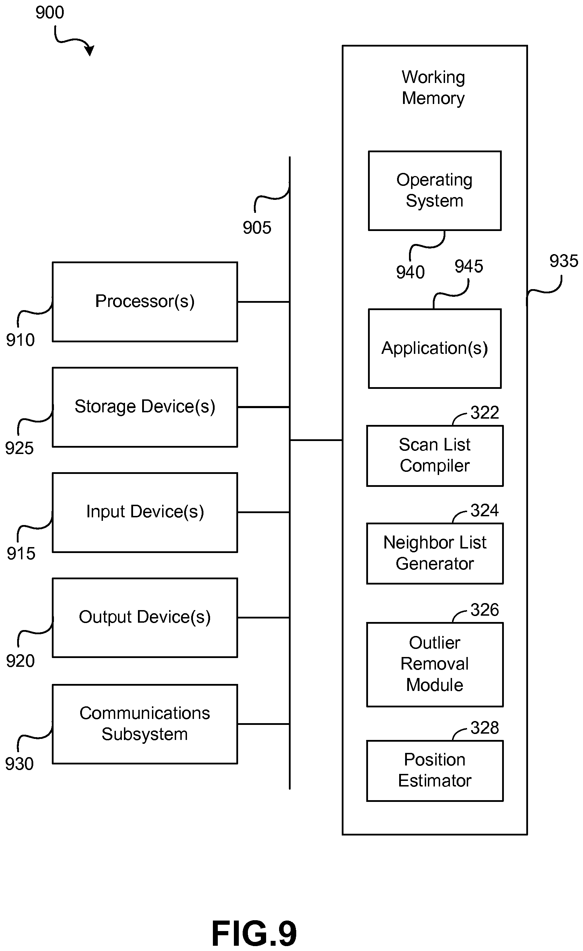

A computer system 900 as illustrated in **FIG. 9** may be utilized to at least partially implement the functionality of the previously described computerized devices. **FIG. 9** provides a schematic illustration of one embodiment of a computer system 900 that can perform the methods provided by various other embodiments, as described herein, and/or can function as a mobile device or other computer system. **FIG. 9** provides a generalized illustration of various components, any or all of which may be utilized as appropriate. **FIG. 9,** therefore, broadly illustrates how individual system elements may be implemented in a relatively separated or relatively more integrated manner.

The computer system 900 is shown comprising hardware elements that can be electrically coupled via a bus 905 (or may otherwise be in communication, as appropriate). The hardware elements may include one or more processors 910, including without limitation one or more general-purpose processors and/or one or more special-purpose processors (such as digital signal processing chips, graphics acceleration processors, and/or the like); one or more input devices 915, which can include without limitation a mouse, a keyboard and/or the like; and one or more output devices 920, which can include without limitation a display device, a printer and/or the like. The processor(s) 910 can include, for example, intelligent hardware devices, e.g., a central processing unit (CPU) such as those made by Intel® Corporation or AMD®, a microcontroller, an ASIC, etc. Other processor types could also be utilized.

The computer system 900 may further include (and/or be in communication with) one or more non-transitory storage devices 925, which can comprise, without limitation, local and/or network accessible storage, and/or can include, without limitation, a disk drive, a drive array, an optical storage device, solid-state storage device such as a random access memory ("RAM") and/or a read-only memory ("ROM"), which can be programmable, flash-updateable and/or the like. Such storage devices may be configured to implement any appropriate data stores, including without limitation, various file systems, database structures, and/or the like.

The computer system 900 might also include a communications subsystem 930, which can include without limitation a modem, a network card (wireless or wired), an infrared communication device, a wireless communication device and/or chipset (such as a BLUETOOTH short-range wireless communication technology transceiver/device, an 802.11 device, a WiFi device, a WiMax device, cellular communication facilities, etc.), and/or the like. The communications subsystem 930 may permit data to be exchanged with a network (such as the network described below, to name one example), other computer systems, and/or any other devices described herein. In many embodiments, the computer system 900 will further comprise, as here, a working memory 935, which can include a RAM or ROM device, as described above.

The computer system 900 also can comprise software elements, shown as being currently located within the working memory 935, including an operating system 940, device drivers, executable libraries, and/or other code, such as one or more application programs 945, which may comprise computer programs provided by various embodiments, and/or may be designed to implement methods, and/or configure systems, provided by other embodiments, as described herein. Merely by way of example, one or more processes described herein might be implemented as code and/or instructions executable by a computer (and/or a processor within a computer). For instance, as shown in **FIG. 9,** one or more of the scan list compiler 322, the neighbor list generator 324, the outlier removal module 326, the position estimator 328, and/or other functional modules described herein could be implemented via the computer system 900 via processor-executable software code executed from the working memory 935 via the processor(s) 910. Such code and/or instructions can be used to configure and/or adapt a general purpose computer (or other device) to perform one or more operations in accordance with the described methods.

A set of these instructions and/or code might be stored on a computer-readable storage medium, such as the storage device(s) 925 described above. In some cases, the storage medium might be incorporated within a computer system, such as the system 900. In other embodiments, the storage medium might be separate from a computer system (e.g., a removable medium, such as a compact disc), and/or provided in an installation package, such that the storage medium can be used to program, configure and/or adapt a general purpose computer with the instructions/code stored thereon. These instructions might take the form of executable code, which is executable by the computer system 900 and/or might take the form of source and/or installable code, which, upon compilation and/or installation on the computer system 900 (e.g., using any of a variety of generally available compilers, installation programs, compression/decompression utilities, etc.) then takes the form of executable code.

Other Considerations

Substantial variations may be made in accordance with specific desires. For example, customized hardware might also be used, and/or particular elements might be implemented in hardware, software (including portable software, such as applets, etc.), or both. Further, connection to other computing devices such as network input/output devices may be employed.

A computer system (such as the computer system 900) may be used to perform methods in accordance with the disclosure. Some or all of the procedures of such methods may be performed by the computer system 900 in response to processor 910 executing one or more sequences of one or more instructions (which might be incorporated into the operating system 940 and/or other code, such as an application program 945) contained in the working memory 935. Such instructions may be read into the working memory 935 from another computer-readable medium, such as one or more of the storage device(s) 925. Merely by way of example, execution of the sequences of instructions contained in the working memory 935 might cause the processor(s) 910 to perform one or more procedures of the methods described herein.

The terms "machine-readable medium" and "computer-readable medium," as used herein, refer to any medium that participates in providing data that causes a machine to operate in a specific fashion. In an embodiment implemented using the computer system 900, various computer-readable media might be involved in providing instructions/code to processor(s) 910 for execution and/or might be used to store and/or carry such instructions/code (e.g., as signals). In many implementations, a computer-readable medium is a physical and/or tangible storage medium. Such a medium may take many forms, including but not limited to, non-volatile media, volatile media, and transmission media. Non-volatile media include, for example, optical and/or magnetic disks, such as the storage device(s) 925. Volatile media include, without limitation, dynamic memory, such as the working memory 935. Transmission media include, without limitation, coaxial cables, copper wire and fiber optics, including the wires that comprise the bus 905, as well as the various components of the communication subsystem 930 (and/or the media by which the communications subsystem 930 provides communication with other devices). Hence, transmission media can also take the form of waves (including without limitation radio, acoustic and/or light waves, such as those generated during radio-wave and infrared data communications).

Common forms of physical and/or tangible computer-readable media include, for example, a floppy disk, a flexible disk, hard disk, magnetic tape, or any other magnetic medium, a CD-ROM, a Blu-Ray disc, any other optical medium, punchcards, papertape, any other physical medium with patterns of holes, a RAM, a PROM, EPROM, a FLASH-EPROM, any other memory chip or cartridge, a carrier wave as described hereinafter, or any other medium from which a computer can read instructions and/or code.

Various forms of computer-readable media may be involved in carrying one or more sequences of one or more instructions to the processor(s) 910 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system 900. These signals, which might be in the form of electromagnetic signals, acoustic signals, optical signals and/or the like, are all examples of carrier waves on which instructions can be encoded, in accordance with various embodiments of the invention.

The communications subsystem 930 (and/or components thereof) generally will receive the signals, and the bus 905 then might carry the signals (and/or the data, instructions, etc. carried by the signals) to the working memory 935, from which the processor(s) 905 retrieves and executes the instructions. The instructions received by the working memory 935 may optionally be stored on a storage device 925 either before or after execution by the processor(s) 910.

The methods, systems, and devices discussed above are examples. Various alternative configurations may omit, substitute, or add various procedures or components as appropriate. For instance, in alternative methods, stages may be performed in orders different from the discussion above, and various stages may be added, omitted, or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Configurations may be described as a process which is depicted as a flow diagram or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, claims. Rather, the preceding description of the configurations will provide those skilled in the art with an enabling description for implementing described techniques. Various changes may be made in the function and arrangement of elements without departing from the spirit or scope of the disclosure.

Configurations may be described as a process which is depicted as a flow diagram or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

**Claims**

1. A method (800) for locating a target transceiver in a wireless communication system, the method comprising:

    obtaining (802) a plurality of scan lists (402, 404, 406, 408), each scan list being from a transceiver that is distinct from the target transceiver and each scan list indicating a set of transceivers including the target transceiver;
    identifying (804), from stored geotagging data, locations of at least some previously located transceivers represented in the plurality of scan lists (402, 404, 406, 408) that are distinct from the target transceiver;
    generating (806) a neighbor list (410) for the target transceiver by combining the plurality of scan lists, wherein the neighbor list (410) comprises indications of the at least some previously located transceivers, and the locations of the at least some previously located transceivers; and
    calculating (810) an estimated location of the target transceiver using the neighbor list (410) and the locations of the at least some previously located transceivers represented in the plurality of scan lists.

2. The method (800) of claim 1 further comprising detecting (808) and removing an erroneously-listed transceiver from the neighbor list (410) prior to the estimating.

3. The method (800) of claim 2 wherein the detecting the erroneously-listed transceiver comprises:

identifying a cluster of transceivers within the neighbor list (410) according to the locations of the at least some previously located transceivers in the neighbor list (410); and
determining a transceiver, in the neighbor list (410), having a location that deviates from locations of respective ones of the cluster of transceivers by more than a threshold to be the erroneously-listed transceiver.

4. The method (800) of claim 1 wherein the identifying comprises obtaining the geotagging data from a transceiver database.

5. The method (800) of claim 4 further comprising storing the estimated location of the target transceiver at the transceiver database.

6. The method (800) of claim 5 further comprising:

marking the estimated location of the target transceiver as non-geotagged in the transceiver database; and
excluding the estimated location of the target transceiver from subsequent transceiver positioning operations.

7. The method (800) of claim 1 wherein the obtaining comprises obtaining the plurality of scan lists (402, 404, 406, 408) from at least one of a mobile device or a transceiver database.

8. The method (800) of claim 7 wherein the obtaining comprises the mobile device communicating with the set of transceivers, the method further comprising the mobile device sending at least one scan list to the transceiver database.

9. The method (800) of claim 1 wherein the geotagging data comprise global navigation satellite system (GNSS) information corresponding to the previously located transceivers.

10. The method (800) of claim 1 wherein the calculating comprises calculating the estimated location of the target transceiver using at least one of a simple mean of locations, a simple median of locations, a weighted mean of locations, a weighted mean of positions corresponding to k received signals of highest received signal strength, or a least-squares iterated location determined by trilateration using received signal strength indications.

11. The method of claim 1 wherein the target transceiver comprises at least one of a Wi-Fi access point, a short-range wireless communication technology transceiver, or a cellular base station.

12. A system (300) for locating a transceiver in a wireless communication system, the system comprising:

means (322) for obtaining a plurality of scan lists (402, 404, 406, 408), each scan list being from a transceiver that is distinct from a target transceiver and each scan list indicating a set of transceivers, the set of transceivers including the target transceiver;
means for identifying, from stored geotagging data, locations of at least some previously located transceivers represented in the plurality of scan lists (402, 404, 406, 408) that are distinct from the target transceiver;
means (324) for generating a neighbor list (410) for the target transceiver by combining the plurality of scan lists (402, 404, 406, 408), wherein the neighbor list comprises indications of the at least some previously located transceivers, and the locations of the at least some previously located transceivers; and
means (328) for estimating a location of the target transceiver using the neighbor list (410) and the locations of the at least some previously located transceivers represented in the plurality of scan lists (402, 404, 406, 408).

13. The system of claim 12 further comprising means for detecting and removing an erroneously-listed transceiver from the neighbor list prior to the estimating.

14. The system of claim 13 wherein the means for detecting the erroneously-listed, transceiver are configured to:

identify a cluster of transceivers within the neighbor list (410) according to the locations of the at least some previously located transceivers in the neighbor list (410); and

determine a transceiver, in the neighbor list (410), having a location that deviates from locations of respective ones of the cluster of transceivers by more than a threshold to be the erroneously-listed transceiver.

15. A processor-readable storage medium comprising processor-readable instructions for locating a target transceiver in a wireless communication system, the instructions being configured to cause a processor to carry out the steps of any of claims 1 to 11.

**Patentansprüche**

1. Ein Verfahren (800) zum Lokalisieren eines Ziel-Transceivers in einem Drahtloskommunikationssystem, wobei das Verfahren Folgendes aufweist:

   Erlangen (802) einer Vielzahl von Scan-Listen (402, 404, 406, 408), wobei jede Scan-Liste von einem Transceiver ist, der sich von dem Ziel-Transceiver unterscheidet und jede Scan-Liste einen Satz von Transceivern anzeigt, der den Ziel-Transceiver beinhaltet;
   Identifizieren (804), aus den gespeicherten Geotagging-Daten, von Standorten wenigstens einiger zuvor lokalisierter Transceiver, die in der Vielzahl der Scan-Listen (402, 404, 406, 408) dargestellt sind, die sich von dem Ziel-Transceiver unterscheiden;
   Generieren (806) einer Nachbarliste (410) für den Ziel-Transceiver durch Kombinieren der Vielzahl von Scan-Listen, wobei die Nachbarliste (410) Anzeigen der wenigstens einigen zuvor lokalisierten Transceiver und die Standorte der wenigstens einigen zuvor lokalisierten Transceiver aufweist; und
   Berechnen (810) eines geschätzten Standortes des Ziel-Transceivers unter Verwendung der Nachbarliste (410) und der Standorte der wenigstens einigen zuvor lokalisierten Transceiver, die in der Vielzahl von Scan-Listen dargestellt sind.

2. Verfahren (800) nach Anspruch 1, das weiter Detektieren (808) und Entfernen eines fälschlicherweise aufgelisteten Transceivers aus der Nachbarliste (410) vor dem Schätzen aufweist.

3. Verfahren (800) nach Anspruch 2, wobei das Detektieren des fälschlicherweise aufgelisteten Transceivers Folgendes aufweist:

   Identifizieren eines Clusters von Transceivern innerhalb der Nachbarliste (410) gemäß den Standorten der wenigstens einigen zuvor lokalisierten Transceiver in der Nachbarliste (410); und
   Bestimmen, dass ein Transceiver in der Nachbarliste (410), der einen Standort hat, der von Standorten von den jeweiligen Transceivern des Cluster von Transceivern um mehr als einen Schwellenwert abweicht, der fälschlicherweise aufgelistete Transceiver ist.

4. Verfahren (800) nach Anspruch 1, wobei das Identifizieren Erlangen der Geotagging-Daten von einer Transceiver-Datenbank aufweist.

5. Verfahren (800) nach Anspruch 4, das weiter Speichern des geschätzten Standortes des Ziel-Transceivers in der Transceiver-Datenbank aufweist.

6. Verfahren (800) nach Anspruch 5, das weiter Folgendes aufweist:

   Markieren des geschätzten Standortes des Ziel-Transceivers als nicht geogetagged in der Transceiver-Datenbank; und
   Ausschließen des geschätzten Standortes des Ziel-Transceivers von den nachfolgenden Transceiver-Ortungsvorgängen.

7. Verfahren (800) nach Anspruch 1, wobei das Erlangen Erlangen der Vielzahl von Scan-Listen (402, 404, 406, 408) von einer Mobileinrichtung und/oder einer Transceiver-Datenbank aufweist.

8. Verfahren (800) nach Anspruch 7, wobei das Erlangen aufweist, dass die Mobileinrichtung mit dem Satz von Transceivern kommuniziert, wobei das Verfahren weiter aufweist, dass die Mobileinrichtung wenigstens eine Scan-Liste an die Transceiver-Datenbank sendet.

9. Verfahren (800) nach Anspruch 1, wobei die Geotagging-Daten Globalnavigationssatellitensystem- bzw. GNSS-Information (GNSS = global navigation satellite system) entsprechend zu den zuvor lokalisierten Transceivern aufweist.

10. Verfahren (800) nach Anspruch 1, wobei das Berechnen Berechnen des geschätzten Standortes des Ziel-Transceivers unter Verwendung von wenigstens einem von Folgendem aufweist: einem einfachen Mittelwert der Standorte, einem einfachen Median der Standorte, einem gewichteten Mittelwert der Standorte, einem gewichteten Mittelwert von Positionen, die k empfangenen Signalen mit der höchsten, empfangenen Signalstärke entsprechen, oder einem Standort, der iterativ mittels kleinsten Quadraten bestimmt ist, bestimmt durch Trilateration unter Verwendung der empfangenen Signalstärkeanzeigen.

11. Verfahren nach Anspruch 1, wobei der Ziel-Transceiver wenigstens eines von Folgendem aufweist: einen Wi-Fi-Zugriffspunkt, einen Kurzstreckendrahtloskommunikationstechnologie-Transceiver oder eine Mobilfunk- bzw. Zellenbasisstation.

12. Ein System (300) zum Lokalisieren eines Transceivers in einem Drahtloskommunikationssystem, wobei das System Folgendes aufweist:

   Mittel (322) zum Erlangen einer Vielzahl von Scan-Listen (402, 404, 406, 408), wobei jede Scan-Liste von einem Transceiver ist, der sich von dem Ziel-Transceiver unterscheidet und jede Scan-Liste einen Satz von Transceiver anzeigt, wobei der Satz von Transceivern den Ziel-Transceiver beinhaltet;
   Mittel zum Identifizieren, aus den gespeicherten Geotagging-Daten, von Standorten wenigstens einiger zuvor lokalisierter Transceiver, die in der Vielzahl der Scan-Listen (402, 404, 406, 408) dargestellt sind, die sich von dem Ziel-Transceiver unterscheiden;
   Mittel (324) zum Generieren einer Nachbarliste (410) für den Ziel-Transceiver durch Kombinieren der Vielzahl von Scan-Listen (402, 404, 406, 408), wobei die Nachbarliste (410) Anzeigen der wenigstens einigen zuvor lokalisierten Transceiver und die Standorte der wenigstens einigen zuvor lokalisierten Transceiver aufweist; und
   Mittel (328) zum Schätzen eines Standortes des Ziel-Transceivers unter Verwendung der Nachbarliste (410) und der Standorte der wenigstens einigen zuvor lokalisierten Transceiver, die in der Vielzahl von Scan-Listen (402, 404, 406, 408) dargestellt sind.

13. System nach Anspruch 12, das weiter Mittel aufweist zum Detektieren und Entfernen eines fälschlicherweise aufgelisteten Transceivers aus der Nachbarliste vor dem Schätzen.

14. System nach Anspruch 13, wobei die Mittel zum Detektieren des fälschlicherweise aufgelisteten Transceivers konfiguriert sind zum:

   Identifizieren eines Clusters von Transceivern innerhalb der Nachbarliste (410) gemäß den Standorten der wenigstens einigen zuvor lokalisierten Transceiver in der Nachbarliste (410); und
   Bestimmen, dass ein Transceiver in der Nachbarliste (410), der einen Standort hat, der von Standorten von den jeweiligen Transceivern des Clusters von Transceivern um mehr als einen Schwellenwert abweicht, der fälschlicherweise aufgelistete Transceiver ist.

15. Ein prozessorlesbares Speichermedium, das prozessorlesbare Instruktionen zum Lokalisieren eines Ziel-Transceivers in einem Drahtloskommunikationssystem aufweist, wobei die Instruktionen konfiguriert sind, einen Prozessor zu veranlassen, die Schritte nach einem der Ansprüche 1 bis 11 auszuführen.

## Revendications

1. Procédé (800) pour localiser un émetteur-récepteur cible dans un système de communication sans fil, le procédé comprenant :

   obtenir (802) une pluralité de listes d'analyse (402, 404, 406, 408), chaque liste d'analyse provenant d'un émetteur-récepteur qui est distinct de l'émetteur-récepteur cible et chaque liste d'analyse indiquant un ensemble d'émetteurs-récepteurs comprenant l'émetteur-récepteur cible ;
   identifier (804), à partir de données de géolocalisation mémorisées, les emplacements d'au moins certains émetteurs-récepteurs localisés précédemment représentés dans la pluralité de listes d'analyse (402, 404, 406, 408) qui sont distincts de l'émetteur-récepteur cible ;

générer (806) une liste de voisins (410) pour l'émetteur-récepteur cible en combinant la pluralité de listes d'analyse, la liste de voisins (410) comprenant des indications desdits au moins certains émetteurs-récepteurs localisés précédemment, et les emplacements desdits au moins certains émetteurs-récepteurs localisés précédemment ; et

calculer (810) une estimation d'emplacement de l'émetteur-récepteur cible en utilisant la liste de voisins (410) et les emplacements desdits au moins certains émetteurs-récepteurs localisés précédemment représentés dans la pluralité de listes d'analyse.

2. Procédé (800) selon la revendication 1, comprenant en outre la détection (808) et le retrait de la liste de voisins (410), avant l'estimation, d'un émetteur-récepteur listé de façon erronée.

3. Procédé (800) selon la revendication 2, dans lequel la détection de l'émetteur-récepteur listé de façon erronée comprend :

identifier une grappe d'émetteurs-récepteurs dans la liste de voisins (410) en fonction des emplacements desdits au moins certains émetteurs-récepteurs localisés précédemment dans la liste de voisins (410) ; et

déterminer un émetteur-récepteur, dans la liste de voisins (410), ayant un emplacement qui s'écarte des emplacements d'émetteurs-récepteurs respectifs de la grappe d'émetteurs-récepteurs de plus qu'un seuil, comme étant l'émetteur-récepteur listé de façon erronée.

4. Procédé (800) selon la revendication 1, dans lequel l'identification comprend l'obtention de données de géolocalisation à partir d'une base de données d'émetteurs-récepteurs.

5. Procédé (800) selon la revendication 4, comprenant en outre la mémorisation de l'emplacement estimé de l'émetteur-récepteur cible au niveau de la base de données d'émetteurs-récepteurs.

6. Procédé (800) selon la revendication 5, comprenant en outre :

marquer l'emplacement estimé de l'émetteur-récepteur cible comme non géolocalisé dans la base de données d'émetteurs-récepteurs ; et

exclure l'emplacement estimé de l'émetteur-récepteur cible d'opérations ultérieures de détermination de position d'émetteurs-récepteurs.

7. Procédé (800) selon la revendication 1, dans lequel l'obtention comprend l'obtention de la pluralité de listes d'analyse (402, 404, 406, 408) à partir d'au moins l'un d'un dispositif mobile ou d'une base de données d'émetteurs-récepteurs.

8. Procédé (800) selon la revendication 7, dans lequel l'obtention comprend que le dispositif mobile communique avec l'ensemble d'émetteurs-récepteurs, le procédé comprenant en outre l'envoi par le dispositif mobile d'au moins une liste d'analyse vers la base de données d'émetteurs-récepteurs.

9. Procédé (800) selon la revendication 1, dans lequel les données de géolocalisation comprennent des informations de système de satellite de navigation globale (GNSS) correspondant aux émetteurs-récepteurs localisés précédemment.

10. Procédé (800) selon la revendication 1, dans lequel le calcul comprend le calcul de l'emplacement estimé de l'émetteur-récepteur cible en utilisant au moins l'une ou l'un d'une moyenne simple d'emplacements, d'une médiane simple d'emplacements, d'une moyenne pondérée d'emplacements, d'une moyenne pondérée de positions correspondant à k signaux reçus avec une intensité de signal reçue la plus élevée, ou d'un emplacement obtenu par itération des moindres carrés déterminé par une trilatération utilisant des indications d'intensité de signaux reçus.

11. Procédé selon la revendication 1, dans lequel l'émetteur-récepteur cible comprend au moins l'un ou l'une d'un point d'accès Wi-Fi, d'un émetteur-récepteur de technologie sans fil à courte portée, ou d'une station de base cellulaire.

12. Système (300) pour localiser un émetteur-récepteur dans un système de communication sans fil, le système comprenant :

des moyens (322) pour obtenir une pluralité de listes d'analyse (402, 404, 406, 408), chaque liste d'analyse provenant d'un émetteur-récepteur qui est distinct d'un émetteur-récepteur cible et chaque liste d'analyse indiquant un ensemble d'émetteurs-récepteurs, l'ensemble d'émetteurs-récepteurs comprenant l'émetteur-récepteur cible ;

des moyens pour identifier, à partir de données de géolocalisation mémorisées, les emplacements d'au moins certains émetteurs-récepteurs localisés précédemment représentés dans la pluralité de listes d'analyse (402, 404, 406, 408) qui sont distincts de l'émetteur-récepteur cible ;

des moyens (324) pour générer une liste de voisins (410) pour l'émetteur-récepteur cible en combinant la pluralité de listes d'analyse (402, 404, 406, 408), la liste de voisins comprenant des indications desdits au moins certains émetteurs-récepteurs localisés précédemment, et les emplacements desdits au moins certains émetteurs-récepteurs localisés précédemment ; et

des moyens (328) pour estimer l'emplacement de l'émetteur-récepteur cible en utilisant la liste de voisins (410) et les emplacements desdits au moins certains émetteurs-récepteurs localisés précédemment représentés dans la pluralité de listes d'analyse (402, 404, 406, 408).

13. Système selon la revendication 12, comprenant en outre des moyens pour détecter et retirer de la liste de voisins, avant l'estimation, un émetteur-récepteur listé de façon erronée.

14. Système selon la revendication 13, dans lequel les moyens pour détecter l'émetteur-récepteur listé de façon erronée sont agencés pour :

identifier une grappe d'émetteurs-récepteurs dans la liste de voisins (410) en fonction des emplacements desdits au moins certains émetteurs-récepteurs localisés précédemment dans la liste de voisins (410) ; et

déterminer un émetteur-récepteur, dans la liste de voisins (410), ayant un emplacement qui s'écarte des emplacements d'émetteurs-récepteurs respectifs de la grappe d'émetteurs-récepteurs de plus qu'un seuil comme étant l'émetteur-récepteur listé de façon erronée.

15. Milieu de stockage lisible par un processeur comprenant des instructions lisibles par un processeur pour localiser un émetteur-récepteur cible dans un système de communication sans fil, les instructions étant agencées pour amener un processeur à réaliser les étapes de l'une quelconque des revendications 1 à 11.

**FIG. 1**

FIG. 2

300

AP Scan List(s)

Scan List Compiler — 322

AP Scan List(s)

Neighbor List
Generator — 324

Neighbor List

Outlier Removal
Module — 326

Pruned Neighbor
List

Position Estimator — 328

Target AP Location

# FIG. 3

400

| 402 | 404 | 406 | 408 |
|---|---|---|---|
| **Scan List Header** | **Scan List Header** | **Scan List Header** | **Scan List Header** |
| AP_a (Lat, Lon, Alt) | AP_b (Lat, Lon, Alt) | AP_j (Lat, Lon, Alt) | AP_a (Lat, Lon, Alt) |
| AP_b (Lat, Lon, Alt) | AP_f (Lat, Lon, Alt) | AP_n (Unknown) | AP_e (Lat, Lon, Alt) |
| AP_c (Lat, Lon, Alt) | AP_j (Lat, Lon, Alt) | | AP_f (Lat, Lon, Alt) |
| AP_d (Lat, Lon, Alt) | AP_m (Unknown) | | AP_h (Unknown) |
| AP_m (Unknown) | AP_n (Unknown) | | AP_n (Unknown) |
| AP_n (Unknown) | | | |

Scan List 3

Scan List 2

Scan List 4

Scan List 1

410

| |
|---|
| AP_a (Lat, Lon, Alt) |
| AP_b (Lat, Lon, Alt) |
| AP_c (Lat, Lon, Alt) |
| AP_d (Lat, Lon, Alt) |
| AP_e (Lat, Lon, Alt) |
| AP_f (Lat, Lon, Alt) |
| AP_j (Lat, Lon, Alt) |

Neighbors of AP_n whose positions are known

**412**

Outlier Removal & Position Estimation

**414**

| AP_n (Lat, Lon, Alt) |
|---|

# FIG. 4

**FIG. 5**

600

| AP_n | Neighbor AP_a (NonGPS-Lat, NonGPS-Lon, NonGPS-Alt) | Neighbor AP_b (NonGPS-Lat, NonGPS-Lon, NonGPS-Alt) | Neighbor AP_c (NonGPS-Lat, NonGPS-Lon, NonGPS-Alt) | Neighbor AP_d (NonGPS-Lat, NonGPS-Lon, NonGPS-Alt) |
|------|---|---|---|---|

602    604    606    608

● ● ●

# FIG. 6

700

| Mac Address | (Lat, Lon, Alt) | (MAR) | ... | *Geotagged* |
|---|---|---|---|---|
| 702 | 704 | 706 | | 708 |
| Mac Address | (Lat, Lon, Alt) | (MAR) | ... | *Non-Geotagged* |

# FIG. 7

800

Obtaining at least one scan list indicating a set of transceivers including a target transceiver — 802

Identifying, from stored geotagging data, locations of at least some previously located transceivers represented in the at least one scan list that are distinct from the target transceiver — 804

Generating a list of neighbor transceivers corresponding to the target transceiver based on the at least one scan list — 806

(Optional) Detecting and removing erroneously listed transceivers — 808

Calculating an estimated location of the target transceiver using the list of neighbor transceivers and the locations of the previously located transceivers represented in the at least one scan list — 810

# FIG. 8

900

Working
Memory

Processor(s)

910

Storage Device(s)

925

Input Device(s)

915

Output Device(s)

920

Communications
Subsystem

930

905

935

Operating
System

940    945

Application(s)

322

Scan List
Compiler

324

Neighbor List
Generator

326

Outlier
Removal
Module

328

Position
Estimator

# FIG.9

**EP 2 898 341 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2005134456 A1

- US 2012015665 A1